# FASCICULE DE BREVET EUROPEEN

(11) **EP 2 729 981 B1**
(45) Date de publication et mention de la délivrance du brevet: **09.09.2015**
(21) Numéro de dépôt: 12733698.0
(22) Date de dépôt: 06.07.2012
(51) Int. Cl.: H01M 8/02

(54) **PROCÉDÉ DE RÉALISATION D'UN JOINT D'ÉTANCHÉITÉ ENTRE DES COMPOSANTS D'UNE PILE À COMBUSTIBLE ET PROCÉDÉ DE FABRICATION D'UNE PILE À COMBUSTIBLE CORRESPONDANT**
VERFAHREN ZUR HERSTELLUNG EINER LECKDICHTEN ABDICHTUNG ZWISCHEN KOMPONENTEN EINER BRENNSTOFFZELLE UND ENTSPRECHENDES VERFAHREN ZUR HERSTELLUNG EINER BRENNSTOFFZELLE
METHOD OF PRODUCING A LEAKTIGHT SEAL BETWEEN COMPONENTS OF A FUEL CELL AND CORRESPONDING METHOD OF MANUFACTURING A FUEL CELL

(30) Priorité: 08.07.2011 FR 1156254
(43) Date de publication de la demande: 14.05.2014
(73) Titulaire: Areva Stockage d'Energie, 13547 Aix-en-Provence (FR)
(72) Inventeur: QUINTIERI, Christian, F-13100 Aix En Provence (FR)
(74) Mandataire: Blot, Philippe Robert Emile
(86) Numéro de dépôt international: PCT/EP2012/063287
(87) Numéro de publication internationale: WO 2013/007649

(56) Documents cités:
- WO-A1-2010/114139
- US-A1- 2005 014 056
- US-A1- 2009 261 502

## Description

La présente invention concerne le domaine des piles à combustible et plus spécifiquement la réalisation de joints d'étanchéité entre des composants d'une pile à combustible.

Une pile à combustible à membrane échangeuse d'ions comprend un empilement de cellules électrochimiques élémentaires. Chaque cellule électrochimique comprend un ensemble membrane-électrode (« EME ») pris en sandwich entre deux plaques séparatrices.

L'ensemble membrane-électrode est stratifié et comprend une membrane échangeuse d'ions prise en sandwich entre deux électrodes. Chaque électrode comprend une couche active adjacente à la membrane et une couche de diffusion de gaz. Une électrode forme anode et l'autre forme cathode.

Chaque plaque séparatrice comprend des gorges ménagées dans sa face en contact avec l'ensemble membrane-électrode de façon à définir entre la plaque séparatrice et l'ensemble membrane-électrode des conduits de circulation d'un gaz réactif en contact avec l'ensemble membrane-électrode. Des joints sont disposés entre les plaques séparatrices et l'ensemble membrane-électrode pour assurer l'étanchéité des conduits de circulation des gaz réactifs.

En option, chaque plaque séparatrice est formée de l'empilement de deux plaques élémentaires définissant entre elles des conduits de circulation d'un fluide de refroidissement. Dans ce cas, des joints sont disposés entre les deux plaques élémentaires pour assurer l'étanchéité des conduits de circulations du fluide de refroidissement.

Il est nécessaire d'obtenir une étanchéité satisfaisante entre des plaques conductrices et un ensemble membrane-électrode disposé entre celle-ci, et le cas échéant entre des plaques élémentaires d'une plaque séparatrice, pour le bon fonctionnement de la pile à combustible.

Le brevet US2005014056 décrit un procédé de réalisation d'un joint d'étanchéité disposé entre une plaque séparatrice et un ensemble membrane-électrode. Le brevet WO2010114139 décrit également un procédé de réalisation d'un joint d'étanchéité dans une pile à combustible.

Un but de l'invention est donc de proposer un procédé de réalisation de joints d'étanchéité entre des composants d'une pile à combustible permettant l'obtention d'une étanchéité satisfaisante de manière simple et avec un coût de fabrication limité.

A cet effet, l'invention propose un procédé de réalisation d'un joint d'étanchéité entre des composants empilés d'une pile à combustible, le procédé comprenant les étapes de :
- déposer au moins un joint d'étanchéité polymérisable non polymérisé sur une portée d'étanchéité d'au moins un des composants,
- polymériser partiellement le ou chaque joint d'étanchéité en superficie de manière à former une peau superficielle polymérisée sur le joint d'étanchéité ;
- mettre en forme le ou chaque joint d'étanchéité par application d'un moule de calibrage sur le ou chaque joint d'étanchéité et retrait du moule de calibrage; et
- polymériser complètement le ou chaque joint d'étanchéité.

Selon d'autres modes de mise en oeuvre, le procédé comprend une ou plusieurs des caractéristiques suivantes, prise(s) isolément ou selon toutes les combinaisons techniquement possibles :
- il comprend, entre l'étape de mise en forme et l'étape de polymérisation complète, une étape d'empiler les composants ;
- les composants comprennent des ensembles membrane-électrode et des plaques séparatrices empilés en alternance ;
- au moins un joint d'étanchéité est disposé entre une plaque séparatrice et un assemblage membrane-électrode ;
- on dépose le ou chaque joint d'étanchéité est déposé et mis en forme sur une plaque séparatrice ou sur un ensemble membrane-électrode ;
- les composants comprennent des plaques séparatrices chacune formée de deux plaques élémentaires empilées ;
- au moins un joint d'étanchéité est disposé entre deux plaques élémentaires d'une plaque séparatrice ;

L'invention concerne également un procédé de fabrication d'une pile à combustible par empilement de composants incluant des plaques séparatrices et des ensembles membrane-électrode, comprenant les étapes de :
- déposer des joints d'étanchéité polymérisable non polymérisé sur des portées d'étanchéité de composant;
- polymériser partiellement les joints d'étanchéité en superficie de manière à former une peau superficielle polymérisée sur les joints d'étanchéité;
- mettre en forme les joints d'étanchéité par application d'un moule de calibrage sur les joints d'étanchéité et retrait du moule de calibrage ; et
- polymériser complètement les joints d'étanchéité.

Dans un mode de mise en oeuvre, le procédé comprend, entre l'étape de mise en forme et l'étape de polymérisation complète, une étape d'empiler les composants.

Dans un mode de mise en oeuvre, le procédé comprend une étape de mise en compression de l'empiler de composants avant ou après l'étape de polymérisation complète.

L'invention et ses avantages seront mieux compris à la lecture de la description qui va suivre, donnée uniquement à titre d'exemple, et faite en référence aux dessins annexés, sur lesquels :
- la Figure 1 est une vue schématique en coupe d'une pile à combustible ;
- les Figures 2 à 7 illustrent des étapes successives d'un procédé de réalisation de joints d'étanchéité entre des composants de la pile à combustible selon l'invention.

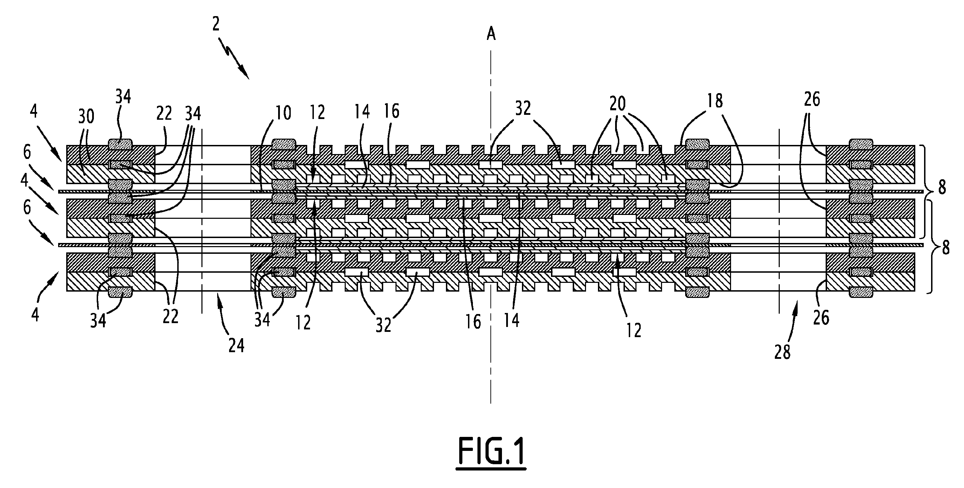

En référence à la Figure 1, la pile à combustible 2 comprend un empilement de plaques séparatrices 4 et d'ensembles membrane-électrode 6 en alternance. Un tel empilement est couramment désigné par le terme anglais « stack ».

Chaque ensemble membrane-électrode 6 est pris en sandwich entre deux plaques séparatrices 4. Chaque ensemble formé de deux plaques séparatrices 4 disposées de part et d'autre d'un ensemble membrane-électrode 6 définit une cellule électrochimique 8 élémentaire de la pile à combustible 2.

Chaque ensemble membrane-électrode 6 est en forme de plaque et stratifié. Chaque ensemble membrane-électrode 6 comprend une membrane 10 échangeuse d'ions 10 et deux électrodes 12 disposées de part et d'autre de la membrane 10.

La membrane 10 est notamment une membrane échangeuse de protons, et la pile à combustible du type PEM (« Proton Exchange Membrane »).

Chaque électrode 12 est conductrice électriquement. Chaque électrode 12 comprend une couche active 14 et une couche de diffusion de gaz 16. Une des électrodes 12 définit une anode et l'autre une cathode.

Les plaques séparatrices 4 assurent la fonction de conduction électrique. Les plaques séparatrices 4 sont électriquement conductrices et en contact électrique avec les électrodes 12.

Les plaques séparatrices 4 assurent la fonction de distribution de gaz réactifs de part et d'autre de l'ensemble membrane-électrode 6 et d'évacuation des produits résultant.

Les plaques séparatrices 4 illustrées sur la figure 1 sont « bipolaires » : chaque plaque séparatrice 4 est disposée entre deux ensembles membrane-électrode 6 et en contact par chacune de ses faces 18 opposées avec un ensemble membrane-électrode. et comprend des gorges sur chacune de ses deux faces opposées. Une plaque séparatrice est dite « monopolaire » lorsqu'elle possède une seule face en contact avec un ensemble membrane-électrode. De telles plaques séparatrices (non visibles) se retrouvent aux extrémités de l'empilement de la pile à combustible 2.

Chaque plaque séparatrice 4 est en contact par une de ses faces 18 avec l'électrode 12 formant anode d'un ensemble membrane-électrode 6 et en contact par l'autre de ses faces 18 avec l'électrode 12 formant cathode de l'autre ensemble membrane-électrode 6.

Chaque plaque séparatrice 4 comprend un ensemble de gorges 20 ménagées sur chacune de ses faces 18 pour définir avec chaque ensemble membrane-électrode 6 adjacent des conduits d'alimentation pour la circulation de gaz réactifs en contact avec l'ensemble membrane-électrode 6.

Les gorges 20 des faces 18 de chaque plaque séparatrice 4 sont alimentées séparément en gaz réactifs différents. Les gorges 20 de la face 18 en contact avec une électrode 12 formant anode sont alimentées en combustible, par exemple de l'hydrogène, et les gorges 20 de l'autre face 18 en contact avec une électrode 12 formant cathode sont alimentée en comburant, par exemple de l'oxygène ou de l'air.

Les gorges 20 des faces 18 des plaques séparatrices 4 en contact avec les électrodes 12 formant anode définissent un compartiment anodique et sont reliées fluidiquement entre elles. Les gorges 20 des faces 18 des plaques séparatrices 4 en contact avec les électrodes 12 formant cathode définissent un compartiment cathodique et sont reliées fluidiquement entre elles.

Chaque plaque séparatrice 4 comprend à sa périphérie un orifice d'alimentation 22 des gorges 20 de chaque face 18 dans lequel les gorges 20 s'alimentent en gaz réactif. Chaque orifice d'alimentation 22 est en communication fluidique avec les gorges 20 d'une face 18 respective. Chaque plaque séparatrice 4 comprend donc un orifice d'alimentation en combustible et un orifice d'alimentation en comburant. Un seul orifice d'alimentation est visible sur la figure 1.

Les orifices d'alimentation 22 traversent les plaques séparatrices 4. Les orifices d'alimentation 22 correspondant des plaques séparatrices 4 sont alignés de façon à définir des collecteurs de distribution 24 des gaz réactifs s'étendant au travers de l'empilement de la pile à combustible. Les orifices d'alimentation 22 des gorges 20 du compartiment anodique sont alignés entre eux pour former un collecteur de distribution 24 anodique et les orifices d'alimentation 22 du compartiment cathodique sont alignés pour former un collecteur de distribution 24 cathodique.

De manière analogue, chaque plaque séparatrice 4 comprend à sa périphérie un orifice d'évacuation 26 dans lequel les gorges 18 de chaque face 20 débouchent pour l'évacuation des produits. Chaque orifice d'évacuation 26 est en communication fluidique avec les gorges 20 d'une face 18 respective. Un seul orifice d'évacuation est visible sur la figure 1.

Les orifices d'évacuation 26 traversent les plaques séparatrices 4. Les orifices d'évacuation 26 correspondant des plaques séparatrices 4 sont alignés de façon à définir des collecteurs d'évacuation 28 des produits s'étendant au travers de l'empilement de la pile à combustible. Les orifices d'évacuation 26 alimentés par les gorges 20 du compartiment anodique sont alignés entre eux et définissent un collecteur d'évacuation 28 anodique, et les orifices d'évacuation 26 alimentés par les gorges 20 du compartiment cathodique sont alignés entre eux définissent un collecteur d'évacuation 28 cathodique.

Les plaques séparatrices 4 assurent la fonction de refroidissement de la pile à combustible 2.

Les plaques séparatrices 4 sont des « biplaques » : chaque plaque séparatrice 4 est formée de l'empilement de deux plaques élémentaires 30. Les plaques élémentaires 30 définissent entre elles des conduits de refroidissement 32 internes à la plaque séparatrice 4 pour la circulation d'un fluide de refroidissement.

Les conduits de refroidissement 32 sont alimentés, de manière analogue aux canaux de circulation, par l'intermédiaire d'orifices d'amenée et d'orifice d'évacuation de fluide de refroidissement traversant les plaques séparatrices 22 à leur périphérie et alignés entre eux.

La pile à combustible 2 comprend des joints disposés entre les différents composants (ensembles membrane-électrode, plaques séparatrices et plaque élémentaires) pour réaliser l'étanchéité des différents circuits fluidique vis-à-vis de l'extérieur et entre eux. Les joints d'étanchéité s'étendent notamment à la périphérie des plaques séparatrices et autour des orifices d'alimentation et d'évacuation.

La pile à combustible 2 comprend des joints 34 d'étanchéité disposés entre chaque plaque séparatrice 4 et chaque ensemble membrane-électrode 6 adjacent, et des joints 34 d'étanchéité disposés entre les plaques élémentaires 30 de chaque plaque séparatrice 4.

Tel qu'illustré sur la figure 1, les joints 34 d'étanchéité entre les plaques séparatrices 4 et les ensembles membrane-électrode 6 adjacent prennent appui sur des régions découvertes des membranes 10. Les plaques séparatrices 4 sont en appui sur les membranes par l'intermédiaire des joints 34 et en appui direct sur les électrodes 12 avec un contact entre les plaques séparatrices 6 et les électrodes 12.

La pile à combustible 2 est maintenue en compression suivant sont axe d'empilement A. Le maintien en compression permet d'assurer la mise en compression des joints 34 d'étanchéité pour assurer l'étanchéité entre les plaques séparatrices 4 et les ensembles membrane-électrode 6, et de maintenir les ensembles membrane-électrode 6 en compression entre les plaques séparatrices 4, en particulier des couches de diffusion de gaz 12, pour assurer un fonctionnement satisfaisant de la pile à combustible 2.

En fonctionnement, les gorges 20 du compartiment anodique sont alimentées en combustible, par exemple de l'hydrogène, et les gorges 20 du compartiment cathodique sont alimentées en comburant, par exemple l'oxygène ou de l'air. Dans chaque cellule électrochimique 8, l'hydrogène subit au contact de l'anode 12 une oxydation catalytique libérant des protons et des électrons. Les électrons circulent dans un circuit électrique externe. Les protons traversent l'ensemble membrane-électrode 6 et se recombinent avec l'oxygène et les électrons en produisant de l'eau. Une différence de potentiel électrique apparaît entre les plaques séparatrices 4 en contact électrique avec l'anode 12 et la cathode 14. L'empilement de cellules électrochimiques 8 permet d'adapter les valeurs de tension et de courant souhaitée.

Pour le bon fonctionnement de la pile à combustible, il est nécessaire que les joints 34 présentent une géométrie maîtrisée pour tenir à la pression des fluides circulant dans les conduits et canaux de circulation définit entre les composants de la pile à combustible (ensembles membrane-électrode, plaques séparatrices et plaque élémentaires) et un contrôle de la pression d'appui des plaques séparatrices 4 contre les électrodes 12. Un défaut de géométrie d'un joint 34 peut conduire à une pression trop importante ou trop faible ou à une mauvaise répartition de la pression.

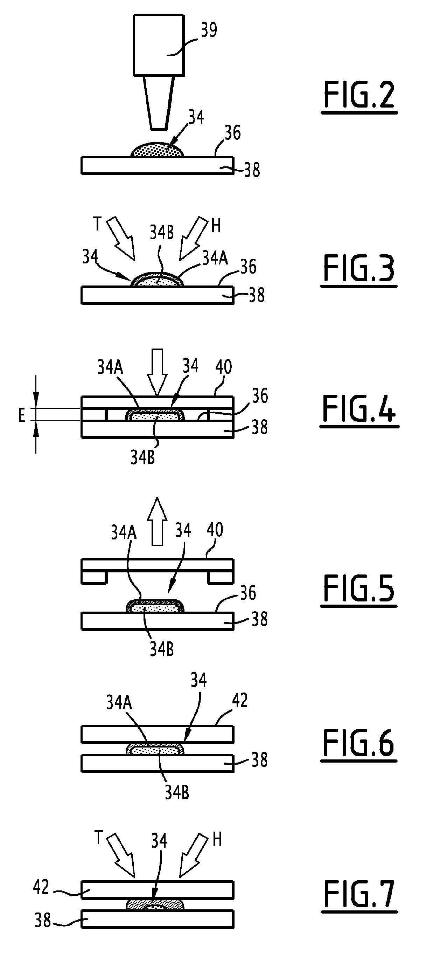

En référence aux figures 2 à 7, le procédé de réalisation de joints d'étanchéité entre des composants empilés d'une pile à combustible comprend les étapes successives de :
- déposer un joint 34 d'étanchéité polymérisable non polymérisé sur une portée d'étanchéité 36 d'un premier composant 38 (Figure 2) ;
- polymériser partiellement le joint 34 d'étanchéité en superficie de manière à former une peau superficielle 34A polymérisée sur le joint 34 d'étanchéité (Figure 3) ;
- mettre en forme le joint 34 d'étanchéité par application d'un moule 40 de calibrage sur le joint d'étanchéité et retrait du moule 40 de calibrage (Figures 4 et 5), et
- polymériser complètement le joint 34 d'étanchéité (Figures 6 et 7).

Dans l'étape de dépose du joint 34 d'étanchéité, le joint 34 d'étanchéité est déposé sur la portée d'étanchéité 36 du composant 38 sous la forme d'un cordon allongé au moyen d'un embout 39. Ce dépôt est effectué manuellement ou de manière automatisée par un robot applicateur.

Dans l'étape de polymérisation, le premier composant 38 muni du joint 34 d'étanchéité est soumis à des conditions de température T et d'hygrométrie H favorisant la polymérisation du joint 34 d'étanchéité. Cette étape est maintenue pendant une durée permettant la formation d'une peau superficielle polymérisée sans atteindre la polymérisation complète du joint 34 d'étanchéité. Le joint 34 d'étanchéité partiellement polymérisé conserve un coeur 34B non polymérisé.

L'étape de mise en forme est effectuée en appliquant le moule 40 sur le composant 38 de façon à mettre en forme le joint 34 (figure 4) puis en retirant le moule 40 (figure 5). Le moule 40 prend appui contre le composant 38, de façon que la géométrie du joint 34 soit contrôlée en prenant comme référence le premier composant 38.

Dans l'exemple illustré, le joint 34 est mis en forme par compression. Le moule 40 impose une hauteur E déterminée au joint 34 par rapport à la portée d'étanchéité 36. La cavité du moule 40 permet au joint 34 de s'écraser et notamment de s'élargir librement pendant la mise en forme du joint 34.

De préférence, dans l'étape de dépose du joint 34, on dépose le joint 34 avec au moins une dimension initiale (ici la hauteur) volontairement supérieure à la dimension souhaitée pour assurer que le moule 40 déformera le joint 34 de façon à ramener le joint à la dimension souhaitée.

La formation préalable d'une peau superficielle permet au joint 34 de conserver une capacité de déformation suffisante pour permettre sa mise en forme ultérieure, tout en assurant que le joint 34 conserve la forme qui lui aura été conférée à l'issue de l'étape de mise en forme de manière suffisamment précise. Bien entendu, il est après retrait du moule de calibrage comme illustré en pointillés sur la figure 5. Ce léger retrait élastique n'est pas pénalisant.

En outre, la formation préalable d'une peau superficielle permet d'appliquer le moule 40 sur le joint 34 sans que le joint 34 ne colle au moule 40. Si nécessaire, le moule est recouvert de Teflon® ou de silicone pour éviter l'adhésion du joint 34 sur le moule 40. Il en résulte que l'étape de mise en forme peut être effectuée avec une intervention humaine limitée, voir automatisée, ce qui réduit le coût de fabrication.

Tel qu'illustré sur les Figures 7 et 8, l'étape de polymérisation complète est réalisée dans des conditions de température et d'hygrométrie favorisant la polymérisation du joint d'étanchéité, pendant une durée suffisante pour la polymérisation à coeur du joint 34.

Tel qu'illustré sur les Figures 7 et 8, un deuxième composant 42 est empilés sur le premier composant 38 (Figure 7) puis l'étape de polymérisation est complète et effectuée (Figure 8).

En alternative, la polymérisation complète du joint est effectuée avant l'empilement des composants.

Les conditions de température et d'hygrométrie et les durées de polymérisation partielle et complète dépendent de la composition du joint 34 d'étanchéité et de sa géométrie, et notamment du rapport de sa surface externe à son volume interne

Les conditions de température et d'hygrométrie de polymérisation sont interrompues entre l'étape de polymérisation partielle et l'étape de polymérisation complète pour arrêter le processus de polymérisation. En variante, elles sont maintenues, les étapes de mise en forme et d'empilement étant effectuées en cours de polymérisation, à un stade de polymérisation partielle.

Les composants 38, 42 de la pile à combustible sont par exemple un ensemble membrane-électrode et une plaque séparatrice ou deux plaques élémentaires d'une plaque séparatrice. Dans le premier cas, le joint 34 est déposé et mise en forme sur l'ensemble membrane-électrode ou sur la plaque séparatrice.

Un procédé correspondant de fabrication d'un pile à combustible par empilement de composants incluant des plaques séparatrices et des ensembles membrane-électrode, comprend les étapes de :
- déposer des joints d'étanchéité polymérisable non polymérisé sur des portées d'étanchéité de composant;
- polymériser partiellement les joints d'étanchéité en superficie de manière à former une peau superficielle polymérisée sur les joints d'étanchéité;
- mettre en forme les joints d'étanchéité par application d'un moule de calibrage sur les joints d'étanchéité et retrait du moule de calibrage ;
- empiler les composants ; et
- polymériser complètement les joints d'étanchéité.

Ceci permet à la réalisation des différentes étapes de montage de la pile à combustible sans attendre la polymérisation complète des joints d'étanchéité ce qui permet un gain de temps et une réduction du coût de fabrication de la pile à combustible.

Le procédé de fabrication comprend une étape de mise en compression de l'empilement de préférence avant l'étape de polymérisation complète. En alternative, elle est effectuée après.

Grâce à l'invention, il est possible de réaliser des joints d'étanchéité entre des composants empilés d'une pile à combustible présentant une géométrie maîtrisée. Ceci assure le bon fonctionnement satisfaisant de la pile à combustible, avec un rendement satisfaisant. Le procédé de réalisation permet la fabrication de la pile à combustible de manière simple et à faible coût.

L'invention s'applique à la fabrication de piles à combustible à membrane échangeuse de protons (PEM) et plus généralement aux piles à combustible à membrane échangeuse d'ion. Elle s'applique notamment également aux piles à combustible à oxyde solide nommées SOFC (« Solid Oxyde Fuel Cell »).

## Revendications

1. Procédé de réalisation d'un joint (34) d'étanchéité entre des composants empilés d'une pile à combustible, le procédé comprenant les étapes de :
- déposer au moins un joint (34) d'étanchéité polymérisable non polymérisé sur une portée d'étanchéité (36) d'au moins un (38) des composants,
- polymériser partiellement le ou chaque joint (34) d'étanchéité en superficie de manière à former une peau superficielle polymérisée sur le joint (34) d'étanchéité ;
- mettre en forme le ou chaque joint (34) d'étanchéité par application d'un moule (40) de calibrage sur le ou chaque joint (34) d'étanchéité et retrait du moule de calibrage; et
- polymériser complètement le ou chaque joint d'étanchéité.

2. Procédé selon la revendication 1, comprenant, entre l'étape de mise en forme et l'étape de polymérisation complète, une étape d'empiler les composants.

3. Procédé selon la revendication 1 ou 2, dans lequel les composants comprennent des ensembles membrane-électrode (6) et des plaques séparatrices (4) empilés en alternance.

4. Procédé selon la revendication 3, dans lequel au moins un joint (34) d'étanchéité est disposé entre une plaque séparatrice (4) et un assemblage membrane-électrode (6).

5. Procédé selon la revendication 3 ou 4, dans lequel le ou chaque joint (34) d'étanchéité est déposé et mis en forme sur une plaque séparatrice (4) ou sur un ensemble membrane-électrode (6).

6. Procédé selon l'une quelconque des revendications précédentes, dans lequel les composants comprennent des plaques séparatrices chacune formée de deux plaques élémentaires empilées.

7. Procédé selon la revendication 6, dans lequel au moins un joint (34) d'étanchéité est disposé entre deux plaques élémentaires d'une plaque séparatrice (4).

8. Procédé de fabrication d'un pile à combustible par empilement de composants incluant des plaques séparatrices (4) et des ensembles membrane-électrode (6), comprend les étapes de :
- déposer des joints (34) d'étanchéité polymérisable non polymérisé sur des portées d'étanchéité de composant;
- polymériser partiellement les joints (34) d'étanchéité en superficie de manière à former une peau superficielle polymérisée sur les joints (34) d'étanchéité;
- mettre en forme les joints (34) d'étanchéité par application d'un moule de calibrage sur les joints (34) d'étanchéité et retrait du moule de calibrage ; et
- polymériser complètement les joints (34) d'étanchéité.

9. Procédé selon la revendication 8, comprenant, entre l'étape de mise en forme et l'étape de polymérisation complète, une étape d'empiler les composants.

10. Procédé selon la revendication 8, comprenant une étape de mise en compression de l'empilement de composants avant ou après l'étape de polymérisation complète.

## Patentansprüche

1. Verfahren zur Herstellung einer Dichtung (34) zwischen geschichteten Komponenten einer Brennstoffzelle, wobei das Verfahren die folgenden Schritte umfasst:
- Anordnen mindestens einer nicht polymerisierten polymerisierbaren Dichtung (34) auf eine Dichtungsauflagefläche (36) mindestens einer (38) der Komponenten,
- teilweises Polymerisieren der oder jeder Dichtung (34) an der Oberfläche, derart, dass auf der Dichtung (34) eine polymerisierte Oberflächenhaut gebildet wird;
- Informbringen der oder jeder Dichtung (34) durch Anwendung einer Kalibrierform (40) an der oder jeder Dichtung (34) und Entfernen der Kalibrierform; und
- vollständiges Polymerisieren der oder jeder Dichtung.

2. Verfahren nach Anspruch 1, zwischen dem Schritt des Informbringens und dem Schritt der vollständigen Polymerisation einen Schritt des Stapelns der Komponenten umfassend.

3. Verfahren nach Anspruch 1 oder 2, bei dem die Komponenten Membran-Elektrode Gruppen (6) und Trennplatten (4) umfassen, die abwechselnd gestapelt werden.

4. Verfahren nach Anspruch 3, bei dem mindestens eine Dichtung (34) zwischen eine Trennplatte (4) und eine Membran-Elektrode Gruppe (6) angeordnet ist.

5. Verfahren nach Anspruch 3 oder 4, bei dem die oder jede Dichtung (34) auf eine Trennplatte (4) oder auf eine Membran-Elektrode Gruppe (6) aufgebracht und in Form gebracht wird.

6. Verfahren nach einem beliebigen der vorhergehenden Ansprüche, bei dem die Komponenten Trennplatten umfassen, wobei jede Trennplatte aus zwei übereinander gestapelten Elementarplatten gebildet wird.

7. Verfahren nach Anspruch 6, bei dem mindestens eine Dichtung (34) zwischen zwei Elementarplatten einer Trennplatte (4) angeordnet ist.

8. Verfahren zur Herstellung einer Brennstoffzelle durch Stapeln von Komponenten, einschließlich von Trennplatten (4) und von Membran-Elektrode Gruppen (6), folgende Schritte umfassend:
- Aufbringen von nicht polymerisierten polymerisierbaren Dichtungen (34) auf Dichtungsauflageflächen der Komponente;
- teilweises Polymerisieren der Dichtungen (34) an der Oberfläche, derart, dass auf den Dichtungen (34) eine polymerisierte Oberflächenhaut gebildet wird;
- Informbringen der Dichtungen (34) durch Aufbringen einer Kalibrierform auf die Dichtungen (34) und Entfernen der Kalibrierform; und
- vollständiges Polymerisieren der Dichtungen.

9. Verfahren nach Anspruch 8, zwischen dem Schritt des Informbringens und dem Schritt der vollständigen Polymerisation einen Schritt des Stapelns der Komponenten umfassend.

10. Verfahren nach Anspruch 8, einen Schritt des Komprimierens des Komponentenstapels vor oder nach dem Schritt der vollständigen Polymerisation umfassend.

## Claims

1. Method of producing a leaktight seal (34) between stacked components of a fuel cell, which method comprises the steps:
- positioning at least one non-polymerised polymerisable seal (34) on a seal bearing surface (36) of at least one (38) of the components;
- partially polymerising the surface of the or each seal (34) so as to form a polymerised surface skin on the seal (34);
- shaping the or each seal (34) by applying a calibration mould (40) to the or each seal (34) and removing the calibration mould; and
- fully polymerising the or each seal.

2. Method as claimed in claim 1, comprising a step of stacking the components between the shaping step and the full polymerisation step.

3. Method as claimed in claim 1 or 2, wherein the components comprise alternatingly stacked membrane-electrode assemblies (6) and separator plates (4).

4. Method as claimed in claim 3, wherein at least one seal (34) is disposed between a separator plate (4) and a membrane-electrode assembly (6).

5. Method as claimed in claim 3 or 4, wherein the or each seal (34) is positioned and shaped on a separator plate (4) or on a membrane-electrode assembly (6).

6. Method as claimed in any one of the preceding claims, wherein the components comprise separator plates, each formed by two stacked base plates.

7. Method as claimed in claim 6, wherein at least one seal (34) is positioned between two base plates of a separator plate (4).

8. Method of producing a fuel cell by stacking components including separator plates (4) and membrane-electrode assemblies (6), comprising the steps:
- positioning non-polymerised polymerisable seals (34) on component seal bearing surfaces;
- partially polymerising the surface of the seals (34) to form a polymerised surface skin on the seals (34);
- shaping the seals (34) by applying a calibration mould to the seals (34) and removing the calibration mould; and
- fully polymerising the seals (34).

9. Method as claimed in claim 8, comprising a step of stacking the components between the shaping step and full polymerisation step.

10. Method as claimed in claim 8, comprising a step of compressing the stack of components before or after the full polymerisation step.
